# EUROPÄISCHE PATENTSCHRIFT

(11) **EP 1 259 406 B1**
(45) Veröffentlichungstag und Bekanntmachung des Hinweises auf die Patenterteilung: **02.08.2006**
(21) Anmeldenummer: 01919341.6
(22) Anmeldetag: 26.02.2001
(51) Int. Cl.: B60S 1/08

(54) **SCHEIBENWISCHERVORRICHTUNG ZUM WISCHEN VON SCHEIBEN**
WINDSCREEN WIPER DEVICE FOR WIPING WINDSCREENS
DISPOSITIF D'ESSUIE-GLACE PERMETTANT D'ESSUYER DES GLACES

(30) Priorität: 01.03.2000 DE 10009797
(43) Veröffentlichungstag der Anmeldung: 27.11.2002
(73) Patentinhaber: Valeo Wischersysteme GmbH, 74321 Bietigheim-Bissingen (DE)
(72) Erfinder: SCHMID, Bernd, 74348 Lauffen am Neckar (DE); HOEGLER, Eberhard, 74391 Erligheim (DE)
(74) Vertreter: Jahn, Wolf-Diethart
(86) Internationale Anmeldenummer: PCT/EP2001/002126
(87) Internationale Veröffentlichungsnummer: WO 2001/064488

(56) Entgegenhaltungen:
- DE-A- 19 634 559

## Beschreibung

Die Erfindung betrifft eine Scheibenwischervorrichtung zum Wischen von Scheiben, mit mindestens einem in seiner Drehrichtung änderbaren Motor und wenigstens einem mit dem Motor gekoppelten, zwischen zwei Umkehrlagen pendelnden Wischer, mit einer den Motor mittels Schaltsignalen schaltenden Steuerung und mit der Steuerung zugeführten Betriebssignalen, wobei die Steuerung aus den Betriebssignalen die Schaltsignale und somit die Umkehrlagen des Wischers bestimmt.

Derartige Scheibenwischervorrichtungen sind beispielsweise aus der DE-A-196 34 559 bekannt geworden. Die Betriebssignale, die der Steuerung zugeführt werden, sind dabei von dem Motorstrom des Motors abhängig. Dadurch wird erreicht, dass bei beispielsweise Blockieren des Wischers ein frühzeitiges Umkehren des Motors aufgrund der hohen Stromaufnahme des Motors ermöglicht wird. Vorteilhafterweise können dadurch die Antriebselemente kleinbauend ausgestaltet werden. Nachteilig an diesem Stand der Technik ist allerdings, dass bei identischen Schaltsignalen das Wischfeld zwischen den beiden Umkehrlagen des Wischers bei einer nassen Scheibe aufgrund des geringeren Reibwiderstandes zwischen Wischer und Scheibenoberfläche größer ist als bei einer trockenen Scheibenoberfläche. Um auch bei einem hohen Benetzungsgrad der Scheibenoberfläche ein Anschlagen des Wischers beispielsweise an der A-Säule eines Fahrzeuges zu vermeiden, wird das Wischfeld nach dem Stand der Technik derart ausgelegt, dass es bei einer nassen Scheibe einen gewissen Sicherheitsabstand zu der A-Säule aufweist. Dies hat zur Folge, dass das Wischfeld bei trockener Scheibenoberfläche zwischen den beiden Umkehrlagen um ca. 5° bis 6° kleiner sein kann als bei nasser Scheibenoberfläche.

Aus der DE-A-197 10 099 sind weiterhin eine Vorrichtung und ein Verfahren zur Steuerung von Scheibenwischern bekannt die einen Wischer im Wischerbetrieb in jeder Umkehrlage exakt an vorgegebenen Positionen stoppen, wobei die lokalen Bedingungen auf der Scheibe hinsichtlich des Benetzungsgrades berücksichtigt werden. Dazu werden die Nachlaufimpulse nach dem Abschalten des Motors vor einer Umkehrlage bis zum Stillstand des Wischers gezählt. Nachteilig ist, dass die so gewonnene Größe erst bei der Steuerung des nachfolgenden Wischzyklus Einfluss nehmen kann, bei dem die lokalen Bedingungen aus der Scheibe hinsichtlich des Benetzungsgrades dann, z. B. durch den soeben ausgeführten Wischzyklus, bereits verändert sind. Hieraus kann sich wiederum eine Ungenauigkeit der Umkehrposition ergeben, in welcher der Wischer stoppt bzw. umkehrt.

Aufgabe der vorliegenden Erfindung ist es daher, eine Scheibenwischvorrichtung bereitzustellen, die das wischfeld zwischen den beiden Umkehrlagen des Wischers je nach Betriebsbedingungen der Scheibenwischvorrichtung optimiert. Die Optimierung kann neben einer Verkleinerung auch in einer Vergrößerung des Wischfeldes liegen.

Diese Aufgabe wird mit einer Scheibenwischvorrichtung der eingangs beschriebenen Art erfindungsgemäß dadurch gelöst, dass als Betriebssignale der Benetzungsgrad der Scheibenoberfläche der Steuerung zugeführt wird. Dadurch kann das Wischfeld zwischen den beiden Umkehrlagen so verändert werden, dass es abhängig von dem Benetzungsgrad der Scheibenoberfläche stets eine optimale Größe aufweist. Bei einer relativ trockenen Scheibe kann das Wischfeld erfindungsgemäß vergrößert werden; bei einer nasseren Scheibe aufgrund des geringeren Reibwiderstandes zwischen Scheibenoberfläche und Wischer verkleinert.

Vorteilhafterweise wird der Benetzungsgrad der Scheibenoberfläche mittels eines Regensensors erfasst. Moderne Fahrzeuge weisen einen solchen Regensensor auf, um ein automatisches Betätigen der Scheibenwischvorrichtung in Abhängigkeit von dem durch den Regensensor erfassten Niederschlag zu erreichen. Der Regensensor wird in seiner ursprünglich vorgesehenen Funktion erweitert und dient zur Übermittlung von Betriebssignalen an die Steuerung.

Bei einer vorteilhaften Weiterbildung der Erfindung ist vorgesehen, dass als weitere Betriebssignale von der Fahrzeuggeschwindigkeit abhängige Signale der Steuerung zugeführt werden. Aufgrund der insbesondere bei hohen Fahrzeuggeschwindigkeiten relativ hohen auf den Wischer wirkenden Windkräften kann insbesondere das Wischfeld zwischen den beiden Umkehrlagen unerwünschterweise vergrößert werden. Dabei kann der Fall eintreten, dass der Wischer beispielsweise gegen die A-Säule des Fahrzeugs schlägt. Aufgrund der eine hohe Fahrzeuggeschwindigkeit kennzeichnenden Betriebssignale kann durch die Steuerung das Wischfeld zwischen den beiden Umkehrlagen des Wischers erfindungsgemäß verkleinert werden.

Dabei kann vorteilhafter Weise vorgesehen sein, dass die Fahrzeuggeschwindigkeit mittels eines Geschwindigkeitssensors erfasst wird. Geschwindigkeitsensoren sind biespielsweise an Tachometer-Einheiten der Fahrzeuge vorhanden, so dass die beispielsweise über den Tachometer ermittelten Geschwindigkeit mittelbar oder unmittelbar als Betriebssignal Verwendung finden kann.

Bei einer anderen bevorzugten Ausführungsform der Erfindung werden als weitere Betriebssignale von dem Motorstrom abhängige Signale der Steuerung zugeführt. Insbesondere in Kombination mit den Betriebssignalen des Benetzungsgrades der Scheibenoberfläche und der Fahrzeuggeschwindikgeit kann durch Erfassen des Motorstroms ein hoher Reibwiderstand zwischen dem Wischer und der Scheibe erkannt werden. Eine hohe Last des Motors deutet auf einen höheren Reibwiderstand zwischen Wischer und Scheibe hin, wodurch der Wischwinkel erfindungsgemäß vergrößernd korrigiert werden kann. Eine geringe Motorlast weist hingegen auf eine geringe Reibung zwischen dem Wischer und der Scheibenoberfläche hin, wodurch ein Verkleinern des Wischfeldes zwischen den beiden Umkehrlagen durch die Steuerung realisiert werden kann.

Zur Erfassung des Motorstroms kann beispielsweise ein Strommesser vorhanden sein.

Bei einer anderen Ausgestaltung der Erfindung werden als Betriebssignale von dem Nachlauf des Motors nach Aus- bzw.

Umschalten des Motors abhängige Signale der Steuerung zugeführt. Ein solches Nachlaufen des Motors beeinflusst in unbeabsichtigter Weise das Wischfeld zwischen den beiden Umkehrlagen des Wischers. Durch Erfassen des Nachlaufs kann ein früheres Umschalten des Motors erreicht werden, so dass eine exakte Korrektur des Nachlaufs ermöglicht wird.

Der Nachlauf des Motors kann dabei vorteilhafter Weise mittels einer Zähleinheit erfasst werden. Art, Aufbau und Funktion einer solchen Zähleinheit ist beispielsweise aus der DE-C-197 10 099 bekannt geworden.

Erfindungsgemäß kann vorgesehen sein, dass als weitere Betriebssignale von der Geschwindigkeit des Wischers abhängige Signale der Steuerung zugeführt werden. Eine höhere Wischergeschwindigkeit führt aufgrund der Trägheit des Wischers und beispielsweis des zwischen dem Motor und des Wischers vorhandenen Wischgestänges, zu einer Erhöhung der Elastizität der Scheibenwischervorrichtung und damit zu einer Vergrößerung des Wischfeldes zwischen den beiden Umkehrlagen. Die Betriebssignale einer höheren Geschwindigkeit des Wischers können aufgrund der entsprechenden Steuerung folglich erfindungsgemäß dazu führen, dass das Wischfeld zwischen den Umkehrlagen des Wischers verkleinert wird.

Zur Ermittlung der Geschwindigkeit des Wischers kann insbesondere mittels eines geeigneten Messsignals erfasst werden. Denkbar ist auch, dass ein an der Achse des Wischers angeordneter Bewegungssensor Verwendung findet oder dass die Schaltsignale, die die Wischergeschwindigkeit bestimmen, unmittelbar erfasst werden.

Die eingangs genannte Aufgabe wird auch mittels eines Verfahrens zum Betreiben einer Scheibenwischervorrichtung mit wenigstens einem zwischen zwei Umkehrlagen pendelnden Wischer, der von einem seine Drehrichtung änderbaren Motor angetrieben wird, mit einer den Motor mittels Schaltsignalen schaltenden Steuerung und mit der Steuerung zugeführten Betriebssignalen, wobei die Steuerung aus den Betriebssignalen die Schaltsignale und somit die Umkehrlagen des Wischers bestimmt, gelöst, das sich dadurch kennzeichnet, dass als Betriebssignale der Benetzungsgrad der Scheibenoberfläche der Steuerung zugeführt wird.

Neben dem Benetzungsgrad der Scheibenoberfläche als Betriebssignal sind Signale denkbar, die abhängig von der Fahrzeuggeschwindigkeit und/oder dem Motorstrom und/oder dem Nachlauf des Motors nach Ausschalten des Motors und/oder der Geschwindigkeit des Wischers sind.

Vorteilhafter Weise erfolgt die Nenneinstellung der Steuerung bei Fahrzeugstillstand.

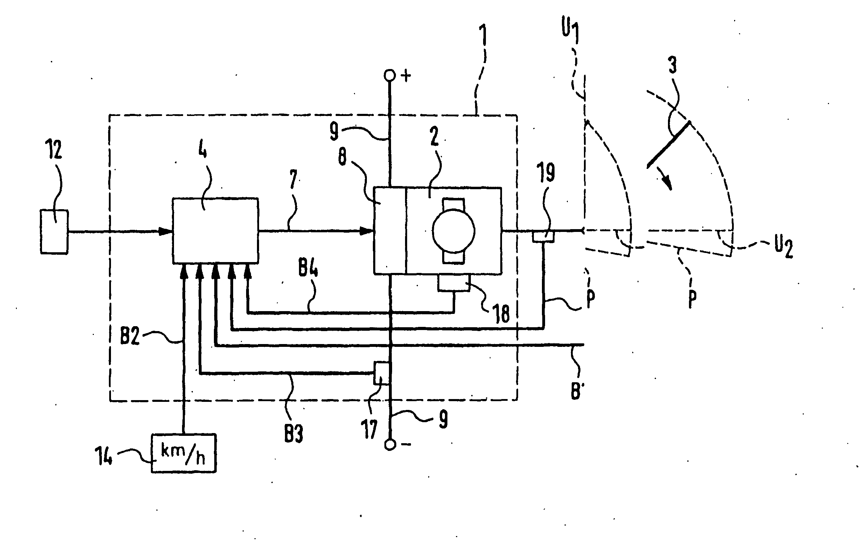

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Figur ist ein Ausführungsbeispiel der erfindungsgemäßen Scheibenwischervorrichtung schemahaft dargestellt. Gezeigt ist eine Scheibenwischvorrichtung 1 mit einem in seiner Drehrichtung änderbaren Motor 2. Mit dem Motor 2 ist ein Wischer 3 gekoppelt, der zwischen zwei Umkehrlagen U₁ und U₂ pendelt. Neben den beiden Umkehrlagen U₁ und U₂ ist eine Parkstellung P des Wischers schematisch angedeutet. Weiterhin ist eine Steuerung 4 vorhanden, welche den Motor 2 mittels Schaltsignalen 7 steuert. Der Motor 2 weist eine Endstufe 8 auf, welcher die vorzugsweise digitalen Schaltsignale 7 zugeführt werden. Über die Endstufe 8 wird der Motor 2 von dem an der Endstufe 8 anliegenden Motorstromzu- und -abführung 9 mit Strom versorgt.

Weiterhin ist ein Betriebsschalter 12 vorhanden, mittels dem über die Steuerung 4 und den Motor 2 der Wischer 3 ein- bzw. ausgeschaltet wird.

Die Steuersignale 7 sind als Grundsignale in der Steuerung 4 abgelegt. Je nach Betätigung des Betriebsschalters 12 werden Steuersignale 7 an den Motor 2 abgegeben, die beispielsweise ein Intervallwischen des Wischers 3, ein normales oder ein schnelles Wischen des Wischers 3 zur Folge haben. Zur Korrektur der Steuersignale 7 werden der Steuerung 4 verschiedene Betriebssignale B1 - B5 zugeführt. Die Betriebssignale B1 - B5 wirken je nach Betriebszustand der Scheibenwischvorrichtung 1, bzw. je nach Zustand der den Wischer 3 umgebenden Umwelteinflüsse, auf die Steuerung 4 und Schaltsignale 7 korrigierend.

Als Betriebssignal B1 wird der Benetzungsgrad der Scheibenoberfläche, der über einen Regensensor 13 generiert wird, der Steuerung 4 zugeführt. Bei einer verhältnismäßig trockenen Scheibe ist der Reibwiderstand zwischen dem Wischer 3 und der Scheibe relativ hoch, wodurch das Wischfeld zwischen den beiden Umkehrlagen U₁ und U₂ kleiner ausfällt, als bei einer nassen Scheibe. Aufgrund des Betriebssignals B1 wird bei einer trockenen Scheibe das Wischfeld vergrößernd korrigiert, bei einer nassen Scheibe entsprechend verkleinert.

Als Betriebssignal B2 wird der Steuerung 4 die Fahrzeuggeschwindigkeit über einen Geschwindigkeitssensor 14 zugeführt. Bei einer hohen Geschwindigkeit des Fahrzeugs wirken relativ hohe Windkräfte auf den Wischer 3, wodurch das Wischfeld zwischen den beiden Umkehrlagen U₁ und U₂ vergrößert wird. Demnach wird durch die Betriebssignale B2 erreicht, dass bei hohen Fahrzeuggeschwindigkeiten das Wischfeld des Wischers 3 korrigierend verkleinert wird.

Auch deran den Motor 2 anliegende Motorstrom kann als weiteres Betriebssignal B3 der Steuerung 4 zugeführt werden. Der Motorstrom wird dabei mittels eines Strommessers 17, beispielsweise eines Amperemeters, ermittelt. Grundsätzlich liegt bei einer trockenen Scheibe, bei der der Reibungswiderstand zwischen dem Wischer 3 und der Scheibenoberfläche.relativ hoch ist, ein höherer Strom an dem Motor 2 an, als bei einer nassen Scheibe. Demnach wird bei einem höheren Motorstrom das Wischfeld des Wischers 3 korrigierend vergrößert. Allerdings kann vorgesehen sein, dass bei Überschreiten einer gewissen Schwelle der Motorlast eine Umkehrung der Drehrichtung des Motors 2 erfolgt, um eine Überbeanspruchung des Motors 2 zu vermeiden.

Als weiteres Betriebssignal B4 wird der Nachlauf des Motors 2 nach Aus- bzw. Umschalten des Motors 2 der Steuerung 4 zugeführt. Der Nachlauf des Motors 2 wird dabei mittels einer Zähleinheit 18 erfasst. Dabei kann beispielsweise an der Ankerwelle des Motors 2 ein Magnetsensor angeordnet sein, der bei Drehung der Ankerwelle den Detektionsbereich eines Magnetfeldsensors passiert. Die Zähleinheit zählt dabei die Anzahl der Drehungen der Ankerwelle nach Abschalten des Motors 2. Der so ermittelte Nachlauf des Motors 2 in einer Umkehrlage U₁ oder U₂ kann bei der nachfolgenden Umkehrlage derart berücksichtigt werden, dass der Motor 2 entsprechend früher aus- bzw. umgeschaltet wird. So kann die gewünschte, vorhergesehene Umkehrlage des Wischers 3 exakt erreicht werden.

Auch die Geschwindigkeit des Wischers 3 kann als Betriebssignal B5 der Steuerung 4 zugeführt werden. Die Geschwindigkeit des Wischers 3 wird dabei vorzugsweise mittels geeigneter Messsignale oder eines Bewegungssensors 19 erfasst.

Bei einer hohen Geschwindigkeit des Wischers 3 nimmt die Elastizität des Wischers 3 sowie des mit dem Wischer 3 gekoppelten, zwischen Motor 2 und Wischer 3 angeordneten, Wischgestänges, zu. Aufgrund dieser Elastizitätszunahme vergrößert sich das Wischfeld des Wischers 3 zwischen den beiden Umkehrlagen U₁ und U₂. Die Steuerung 4 kann über das Betriebssignal B5 hierbei korrigierend eingreifen.

Die in der Figur gezeigte und beschriebene Scheibenwischvorrichtung 1 weist insbesondere den Vorteil auf, dass Betriebseinflüsse, die das Wischfeld zwischen den beiden Umkehrlagen U₁ und U₂ beeinflussen, in Form von Betriebssignalen B1 - B5 der Steuereinheit 4 zugeführt werden, und diese den optimalen, an die Betriebszustände angepassten Wischwinkel des Wischers 3 ermittelt und über die Schaltsignale 7 der Endstufe 8 bzw. dem Motor 2 zuführt. Je nach Betriebszustand und Umwelteinflüssen wird der Wischwinkel korrigierend vergrößert oder verkleinert.

## Patentansprüche

1. Scheibenwischervorrichtung (1) zum Wischen von Scheiben, mit mindestens einem in seiner Drehrichtung änderbaren Motor (2) und wenigstens einem mit dem Motor (2) gekoppelten, zwischen zwei Umkehrlagen (U₁, U₂) pendelnden Wischer (3), mit einer den Motor (2) mittels Schaltsignalen (7) schaltenden Steuerung (4) und mit der Steuerung (4) zugeführten Betriebssignalen, wobei die Steuerung (4) aus den Betriebssignalen die Schaltsignale (7) und somit die Umkehrlagen (U₁, U₂) des Wischers (3) bestimmt, **dadurch gekennzeichnet, dass** als Betriebssignale (B1) der Benetzungsgrad der Scheibenoberfläche der Steuerung (4) zugeführt wird, wobei abhängig vom Benetzungsgrad der Scheibenoberfläche das Wischfeld über die Steuerung (4) bei einer relativ trockenen Scheibe vergrößernd korrigierbar und bei einer nassen Scheibe verkleinernd korrigierbar ist.

2. Scheibenwischervorrichtung (1) nach Anspruch 1, **dadurch gekennzeichnet, dass** der Benetzungsgrad der Scheibenoberfläche mittels eines Regensensors (13) erfasst wird.

3. Scheibenwischervorrichtung (1) nach Anspruch 1 oder 2, **dadurch gekennzeichnet, dass** als Betriebssignale (B2) von der Fahrzeuggeschwindigkeit abhängige Signale der Steuerung (4) zugeführt werden.

4. Scheibenwischervorrichtung (1) nach Anspruch 3, **dadurch gekennzeichnet, dass** die Fahrzeuggeschwindigkeit mittels eines Geschwindigkeitssensors (14) erfasst wird.

5. Scheibenwischervorrichtung (1) nach einem der vorhergehenden Ansprüche, **dadurch gekennzeichnet, dass** als Betriebssignale (B3) von dem Motorstrom abhängige Signale der Steuerung (4) zugeführt werden.

6. Scheibenwischervorrichtung (1) nach Anspruch 5, **dadurch gekennzeichnet, dass** zur Erfassung des Motorstromes ein Strommesser (17) vorhanden ist.

7. Scheibenwischervorrichtung (1) nach einem der vorhergehenden Ansprüche, **dadurch gekennzeichnet, dass** als Betriebssignale (B4) von dem Nachlauf des Motors (2) nach Aus- bzw. Umschalten des Motors (2) abhängige Signale der Steuerung (4) zugeführt werden.

8. Scheibenwischervorrichtung (1) nach Anspruch 7, **dadurch gekennzeichnet, dass** der Nachlauf des Motors (2) mittels einer Zähleinheit (18) erfasst wird.

9. Scheibenwischervorrichtung (1) nach einem der vorhergehenden Ansprüche, **dadurch gekennzeichnet, dass** als Betriebssignale (B5) von der Geschwindigkeit des Wischers (3) abhängige Signale der Steuerung (4) zugeführt wird.

10. Scheibenwischervorrichtung (1) nach Anspruch 9, **dadurch gekennzeichnet, dass** die Geschwindigkeit des Wischers (3) mittels geeigneter Messsignale oder eines Bewegungssensors (19) erfasst wird.

11. Verfahren zum Betreiben einer Scheibenwischvorrichtung (1) mit wenigstens einem zwischen zwei Umkehrlagen (U₁,U₂) pendelnden Wischer (3), der von einem seine Drehrichtung änderbaren Motor (2) angetrieben wird, mit einer den Motor (2) mittels Schaltsignalen (7) schaltenden Steuerung (4) und mit der Steuerung (4) zugeführten Betriebssignalen, wobei die Steuerung (4) aus den Betriebssignalen die Schaltsignale (7) und somit die Umkehrlagen (U₁,U₂) des Wischers (3) bestimmt, **dadurch gekennzeichnet, dass** als Betriebssignale (B1) der Benetzungsgrad der Scheibenoberfläche der Steuerung (4) zugeführt wird, wobei abhängig vom Benetzungsgrad der Scheibenoberfläche das Wischfeld über die Steuerung (4) bei einer relativ trockenen Scheibe vergrößernd korrigiert und bei einer nassen Scheibe verkleinernd korrigiert wird.

12. Verfahren nach Anspruch 11, **dadurch gekennzeichnet, dass** als Betriebssignale (B2) von der Fahrzeuggeschwindigkeit abhängige Signale der Steuerung (4) zugeführt werden.

13. Verfahren nach Anspruch 11 oder 12, **dadurch gekennzeichnet, dass** als Betriebssignale (B3) von dem Motorstrom abhängige Signale der Steuerung (4) zugeführt werden.

14. Verfahren nach Anspruch 11, 12 oder 13, **dadurch gekennzeichnet**, als Betriebssignale (B4) von dem Nachlauf des Motors (2) nach Aus- bzw. Umschalten des Motors (2) abhängige Signale der Steuerung (4) zugeführt werden.

15. Verfahren nach einem der Ansprüche 11 bis 14, **dadurch gekennzeichnet, dass** als Betriebssignale (B4) von dem Nachlauf des Motors (2) nach Aus- bzw. Umschalten des Motors (2) abhängige Signale der Steuerung (4) zugeführt an der Achse des Wischers angeordnet werden.

16. Verfahren nach einem der Ansprüche 11 bis 15, **dadurch gekennzeichnet, dass** die Nenneinstellung der Steuerung (4) bei Fahrzeugstillstand vorgenommen wird.

## Claims

1. Windscreen wiper device (1) for wiping windscreens, comprising at least one motor (2) whose direction of rotation can be altered, at least one wiper (3) which is coupled to the motor (2) and which moves back and forth between two reversing positions (U₁, U₂), a control device (4) which switches the motor (2) by means of switching signals (7), and operating signals which are conveyed to the control device (4), wherein the control device (4) determines the switching signals (7) from the operating signals and thus determines the reversing positions (U₁, U₂) of the wiper (3), **characterized in that** the degree of wetness of the windscreen surface is conveyed to the control device (4) as operating signals (B1), wherein, depending on the degree of wetness of the windscreen surface, the wiping field can be corrected by enlarging it if the windscreen is relatively dry and can be corrected by reducing it if the windscreen is wet, via the control device (4).

2. Windscreen wiper device (1) according to Claim 1, **characterized in that** the degree of wetness of the windscreen surface is detected by means of a rain sensor (13).

3. Windscreen wiper device (1) according to Claim 1 or 2, **characterized in that** signals dependent on the vehicle speed are conveyed to the control device (4) as operating signals (B2).

4. Windscreen wiper device (1) according to Claim 3, **characterized in that** the vehicle speed is detected by means of a speed sensor (14).

5. Windscreen wiper device (1) according to any of the preceding claims, **characterized in that** signals dependent on the motor current are conveyed to the control device (4) as operating signals (B3).

6. Windscreen wiper device (1) according to Claim 5, **characterized in that** a current measuring device (17) is provided for detecting the motor current.

7. Windscreen wiper device (1) according to any of the preceding claims, **characterized in that** signals dependent on the over-run of the motor (2) after the motor (2) is switched off or reversed are conveyed to the control device (4) as operating signals (B4).

8. Windscreen wiper device (1) according to Claim 7, **characterized in that** the over-run of the motor (2) is detected by means of a counter (18).

9. Windscreen wiper device (1) according to any of the preceding claims, **characterized in that** signals dependent on the speed of the wiper (3) are conveyed to the control device (4) as operating signals (B5).

10. Windscreen wiper device (1) according to Claim 9, **characterized in that** the speed of the wiper (3) is detected by means of suitable measurement signals or a motion sensor (19).

11. Method of operating a windscreen wiper device (1) comprising at least one wiper (3) which moves back and forth between two reversing positions (U₁, U₂) and which is driven by a motor (2) whose direction of rotation can be altered, a control device (4) which switches the motor (2) by means of switching signals (7), and operating signals which are conveyed to the control device (4), wherein the control device (4) determines the switching signals (7) from the operating signals and thus determines the reversing positions (U₁, U₂) of the wiper (3), **characterized in that** the degree of wetness of the windscreen surface is conveyed to the control device (4) as operating signals (B1), wherein, depending on the degree of wetness of the windscreen surface, the wiping field can be corrected by enlarging it if the windscreen is relatively dry and can be corrected by reducing it if the windscreen is wet, via the control device (4).

12. Method according to Claim 11, **characterized in that** signals dependent on the vehicle speed are conveyed to the control device (4) as operating signals (B2).

13. Method according to Claim 11 or 12, **characterized in that** signals dependent on the motor current are conveyed to the control device (4) as operating signals (B3).

14. Method according to Claim 11, 12 or 13, **characterized in that** signals dependent on the over-run of the motor (2) after the motor (2) is switched off or reversed are conveyed to the control device (4) as operating signals (B4).

15. Method according to any of Claims 11 to 14, **characterized in that** signals dependent on the over-run of the motor (2) after the motor (2) is switched off or reversed are conveyed to the control device (4) as operating signals (B4) are arranged on the shaft of the wiper.

16. Method according to any of Claims 11 to 15, **characterized in that** the control device (4) is adjusted to its base setting with the vehicle stationary.

## Revendications

1. Système d'essuie-glace (1) pour le balayage de vitres, avec au moins un moteur (2) pouvant changer de sens de rotation et au moins un essuie-glace (3) oscillant entre deux positions d'inversion (U₁ et U₂) et couplé au moteur (2), avec une commande (4) commutant le moteur (2) au moyen de signaux de commutation (7) et avec des signaux de fonctionnement délivrés à la commande (4), la commande (4) déterminant à partir des signaux de fonctionnement les signaux de commutation (7), et donc les positions d'inversion (U₁ ou U₂) de l'essuie-glace (3), **caractérisé en ce que** le degré d'humidité de la surface vitrée est délivré à la commande (4) sous la forme de signaux de fonctionnement (B1), moyennant quoi le champ balayé peut, par l'intermédiaire de la commande (4), en fonction du degré d'humidité de la surface vitrée, être corrigé pour être agrandi pour une vitre relativement sèche et être corrigé pour être réduit pour une vitre mouillée.

2. Système d'essuie-glace (1) selon la revendication 1, **caractérisé en ce que** le degré d'humidité de la surface vitrée est détecté au moyen d'un capteur de pluie (13).

3. Système d'essuie-glace (1) selon la revendication 1 ou 2, **caractérisé en ce que** des signaux dépendant de la vitesse du véhicule sont délivrés à la commande (4) en tant que signaux de fonctionnement (B2).

4. Système d'essuie-glace (1) selon la revendication 3, **caractérisé en ce que** la vitesse du véhicule est détectée au moyen d'un capteur de vitesse (14).

5. Système d'essuie-glace (1) selon une des revendications précédentes, **caractérisé en ce que** des signaux dépendant du courant moteur sont délivrés à la commande (4) en tant que signaux de fonctionnement (B3).

6. Système d'essuie-glace (1) selon la revendication 5, **caractérisé en ce qu'**il existe un instrument de mesure du courant (17) pour la détection du courant moteur.

7. Système d'essuie-glace (1) selon une des revendications précédentes, **caractérisé en ce que** des signaux dépendant de la marche par inertie du moteur (2) après l'arrêt ou l'inversion du moteur (2) sont fournis à la commande (4) en tant que signaux de fonctionnement (B4).

8. Système d'essuie-glace (1) selon la revendication 7, **caractérisé en ce que** la marche par inertie du moteur (2) est détectée par l'intermédiaire d'un compteur (18).

9. Système d'essuie-glace (1) selon une des revendications précédentes, **caractérisé en ce que** des signaux fonction de la vitesse de l'essuie-glace (3) sont délivrés à la commande (4) en tant que signaux de fonctionnement (B5).

10. Système d'essuie-glace (1) selon la revendications 9, **caractérisé en ce que** la vitesse de l'essuie-glace (3) est détectée au moyen de signaux de mesure appropriés ou d'un capteur de mouvement (19).

11. Procédé pour le fonctionnement d'un système d'essuie-glace (1), avec au moins un essuie-glace (3) oscillant entre deux positions d'inversion (U₁, U₂), qui est entraîné par un moteur (2) pouvant changer de sens de rotation, avec une commande (4) commutant le moteur (2) au moyen de signaux de commutation (7), et avec des signaux de fonctionnement délivrés à la commande (4), la commande (4) déterminant les signaux de commutation (7), et donc les positions d'inversion (U₁, U₂) de l'essuie-glace (3), à partir des signaux de fonctionnement, **caractérisé en ce que** le degré d'humidité de la surface vitrée est délivré à la commande (4) sous la forme de signaux de fonctionnement (B1) moyennant quoi, en fonction du degré d'humidité de la surface vitrée, par l'intermédiaire de la commande (4), le champ balayé est corrigé pour être agrandi pour une vitre relativement sèche et corrigé pour être réduit pour une vitre mouillée.

12. Procédé selon la revendication 11, **caractérisé en ce que** des signaux dépendant de la vitesse du véhicule sont délivrés à la commande (4) en tant que signaux de fonctionnement (B2).

13. Procédé selon la revendication 11 ou 12, **caractérisé en ce que** des signaux dépendant du courant moteur sont délivrés à la commande (4) en tant que signaux de fonctionnement (B3).

14. Procédé selon la revendication 11, 12 ou 13, **caractérisé en ce que** des signaux fonction de la marche par inertie du moteur (2) après l'arrêt ou l'inversion du moteur (2) sont délivrés à la commande (4) en tant que signaux de fonctionnement (B4).

15. Procédé selon une des revendications 11 à 14, **caractérisé en ce que** des signaux fonction de la marche par inertie du moteur (2) après l'arrêt ou l'inversion du moteur (2) sont délivrés à la commande (4) en tant que signaux de fonctionnement (B4), en étant disposé sur l'axe de l'essuie-glace.

16. Procédé selon une des revendications 11 à 15, **caractérisé en ce que** le réglage nominal de la commande (4) est réalisé véhicule immobilisé.
